# EUROPÄISCHE PATENTANMELDUNG

(11) **EP 1 870 538 A1**
(43) Veröffentlichungstag der Anmeldung: **26.12.2007**
(21) Anmeldenummer: 07012154.6
(22) Anmeldetag: 21.06.2007
(51) Int. Cl.: E04G 17/065

(54) **Ankermutter für Ankerstäbe**

(30) Priorität: 22.06.2006 CH 10052006
(71) Anmelder: Gerber, Heinz, 5400 Baden (CH); Hächler AG, 5400 Baden (DE)
(72) Erfinder: Gerber, Heinz, 5452 Oberrohrdorf (CH)
(74) Vertreter: Lauer, Joachim

(57) **Zusammenfassung**

Bei einer Ankermutter für Ankerstäbe mit einer längsgeteilten Mutter, deren Teile (10, 20) aneinander angelenkt, quer auf die Ankerstäbe aufsetzbar und durch Zusammenklappen mit deren Gewinde in Eingriff bringbar sind und wobei Mittel (47) zum Zusammenhalten der Mutter vorhanden sind, wird erfindungsgemäss vorgeschlagen, dass die Mittel (47) zum Zusammenhalten lediglich einen Teilumfang der Mutter umgreifen und mit ihr unverlierbar verbunden sind. Die Mittel (47) zum Zusammenhalten brauchen hierdurch nicht auf die Ankerstäbe von deren Ende her aufgeschoben zu werden, sondern können durch eine Bewegung quer zu diesen in ihre Funktionsstellung gebracht bzw. aus dieser auch wieder gelöst werden. Eine Montage oder Demontage der erfindungsgemässen Ankermutter im Bereich zwischen zwei Doppelwandschalungen ist dadurch ebenfalls möglich. Auch werden separate Teile vermieden, so dass die erfindungsgemässe Ankermutter als einheitliches, zusammenhängendes Element handhabbar ist.

## Beschreibung

### TECHNISCHES GEBIET

Die vorliegende Erfindung betrifft eine Ankermutter für Ankerstäbe mit einer längsgeteilten Mutter, deren Teile aneinander angelenkt, quer auf die Ankerstäbe aufsetzbar und durch Zusammenklappen mit deren Gewinde in Eingriff bringbar sind und wobei Mittel zum Verschliessen der Mutter vorhanden sind.

Derartige Ankermuttern werden insbesondere zum Verspannen von Schalungsankern im Betonbau eingesetzt. Durch die Längsteilung der Mutter entfällt beim Anbringen der Verspannung die Notwendigkeit, sie auf die Ankerstäbe von deren freiem Ende her aufzudrehen bzw. sie zu ihrer Demontage bis zu deren freiem Enden hin wieder abzudrehen. Vor allem wenn die Ankerstäbe weit über die Schalungsplatten überstehen, wäre damit ein erheblicher Schraubaufwand verbunden. Ausserdem wird die Montage und Demontage auf und von Ankerstäben erleichtert, deren Gewinde verletzt oder z. B. mit Betonresten verunreinigt ist.

### STAND DER TECHNIK

Eine Ankermutter der vorgenannten Art ist bekannt aus dem deutschen Gebrauchsmuster 72 39 999, wobei als Mittel zum Zusammenhalten der Mutter ein mit einem Innenkonus versehener geschlossener Ring vorgesehen ist. Dieser wird auf den Ankerstab von dessen freiem Ende her aufgeschoben und gegen das zu verspannende Bauteil, z.B. eine Schalungsplatte, gelegt. Dann wird die Mutter vor dem Ring über dem Ankerstab zusammengeklappt und mit einem entsprechenden Aussenkonus in den Innenkonus des Ringes hineingeschraubt. Hierbei presst der Innenkonus gegen den Aussenkonus, so dass Selbsthemmung eintritt. Diese Selbsthemmung verhindert allerdings, dass die Mutter und mit ihr die Schalung in Längsrichtung des Schalungsankers nachjustiert werde kann. Zur Demontage der Mutter muss diese zunächst wieder aus dem Ring herausgeschraubt werden. Die bekannte Ankermutter ist auch noch mit einer ringförmigen Druckplatte versehen, die wie der Ring auf den Ankerstab aufgeschoben werden muss. Die Druckpatte kann Bestandteil des Rings sein. Mutter und Ring bilden jedem Fall jedoch separate Teile.

Die Notwendigkeit, ein ringförmiges Teil auf den Ankerstab von dessen freiem Ende her aufzuschieben, ist nachteilig bei der Erstellung von Schalungen für Doppelwände unter Verwendung von langen, beide Schalungen durchgreifenden Ankerstäben. Es müssen nämlich sämtliche Ankermuttern im Bereich zwischen den beiden Schalungen angebracht werden, bevor die Schalung für die zweite Wand erstellt werden kann.

Bei den aus DE 197 03 303 C1, DE 195 10 117 A1 sowie DE 295 05 507 U1 bekannten Ankermuttern muss ebenfalls jeweils mindestens ein Teil auf den Ankerstab von dessen freiem Ende her aufgeschoben werden.

### DARSTELLUNG DER ERFINDUNG

Aufgabe der Erfindung war es daher, eine Ankermutter der vorbeschriebenen Art zur Verfügung zu stellen, welche noch einfacher und rationeller handhabbar und auch universeller einsetzbar ist.

Gelöst wird diese Aufgabe durch eine Ankermutter wie sie in Anspruch 1 angegeben ist. Vorteilhafte und dadurch bevorzugte Ausgestaltungen und Weiterbildungen der erfindungsgemässen Ankermutter sind in den abhängigen Ansprüchen umschrieben. Der Kern der Erfindung besteht demnach darin, dass bei einer Ankermutter der eingangs genannten Art die Mittel zum Zusammenhalten der Mutter lediglich einen Teilumfang von ihr umgreifen und mit ihr unverlierbar verbunden sind. Die Mittel zum Zusammenhalten brauchen hierdurch nicht auf die Ankerstäbe von deren Ende her aufgeschoben zu werden, sondern können durch eine Bewegung quer zu diesen in ihre Funktionsstellung gebracht bzw. aus dieser auch wieder gelöst werden. Eine Montage oder Demontage der erfindungsgemässen Ankermutter im Bereich zwischen zwei Doppelwandschalungen ist dadurch ebenfalls möglich. Auch werden separate Teile vermieden, so dass die erfindungsgemässe Ankermutter als einheitliches, zusammenhängendes Element handhabbar ist.

Bevorzugt sind die Mittel zum Zusammenhalten so ausgebildet, dass sie auch bei angezogener Mutter lösbar sind. Die Ankermutter ist dann demontierbar, ohne dass zuvor die Mutter gelöst werden muss.

In einer weiteren bevorzugten Ausführungsform der Erfindung sind die Teile der Mutter auf ihrer der Anlenkung gegenüberliegenden Seite mit Spannbacken versehen, wobei die Mittel zum Zusammenhalten an diesen Spannbacken angreifen.

Die Mittel zum Zusammenhalten können z.B. eine elastische Klammer umfassen, die an einem der Teile der Mutter, insbesondere an einem der genannten Spannbacken, befestigt ist und an dem anderen Teil, insbesondere an dem anderen Spannbacken, beim Zusammenklappen der Mutter selbsttätig einrastet. Zum einfachen Lösen der Verrastung könnte die Klammer mit einem zum Ansetzen eines Werkzeugs geeigneten Abschnitt versehen sein.

Es könnten als Mittel zum Zusammenhalten aber auch ein an einem der Teile befestigter Spannbügel mit einer Drahtklammer, wie er von Flaschenverschlüssen bekannt ist, vorgesehen sein oder ein schwenkbar an einem der Teile angelenkter Gewindebolzen mit Feststellmutter, wobei der Drahtbügel z.B. einen der Spannbacken umgreifen bzw. der Gewindebolzen in eine Nut in einem der Spannbacken eingreifen könnte.

Gemäss einer weiteren Ausführungsform der Erfindung ist vorgesehen, dass einer der Teile der Mutter mit einem breiten Lagerauge zwischen ein Paar von Lageraugen des anderen Teils eingreift und dass ein Lagerbolzen die genannten Lageraugen durchgreift.

Die erfindungsgemässe Ankermutter weist bevorzugt auch noch eine geteilte Druckplatte auf, deren Teile mit den Teilen der Mutter einstückig ausgeführt sind.

Die Druckplatte ist hierbei weiter bevorzugt so geteilt, dass sich in ihrem einen Teil eines der Lageraugen des Paares von Lageraugen und in ihrem anderen Teil eine entsprechende Ausnehmung ergibt.

In an sich bekannter Weise können die Teile der Mutter mit angeformten Flügeln nach Art einer Flügelschraube versehen sein. Bei Vorhandensein einer geteilten Druckplatte ist es bevorzugt, wenn die Flügel jeweils auch an die Druckplattenteile angeformt sind, um hierdurch eine höhere Belastbarkeit zu erreichen sowie umgekehrt den Teilen eine grössere Stabilität zu verleihen.

In ebenfalls an sich bekannter Weise können sich die Aussenkonturen der Teile der Mutter entlang eines Längsabschnitts zu einer z.B. konischen Sechskantmutter ergänzen. Bei Vorhandensein von Flügeln können deren Enden abgebogen sein und in den Bereich der Sechskantmutter vorstehen, so dass zwischen der Sechskantmutter und den Flügelenden ein Hebelwerkzeug zum Anziehen oder Lösen der Mutter ansetzbar ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine Ankermutter nach der Erfindung in geschlossenem Zustand;
- Fig. 2: die Ankermutter von Fig. 1 in geöffnetem Zustand;
- Fig. 3: ein erster Teil der Ankermutter von Fig. 1; und
- Fig. 4: ein zweiter Teil der Ankermutter von Fig. 1.

### WEGE ZUR AUSFÜHRUNG DER ERFINDUNG

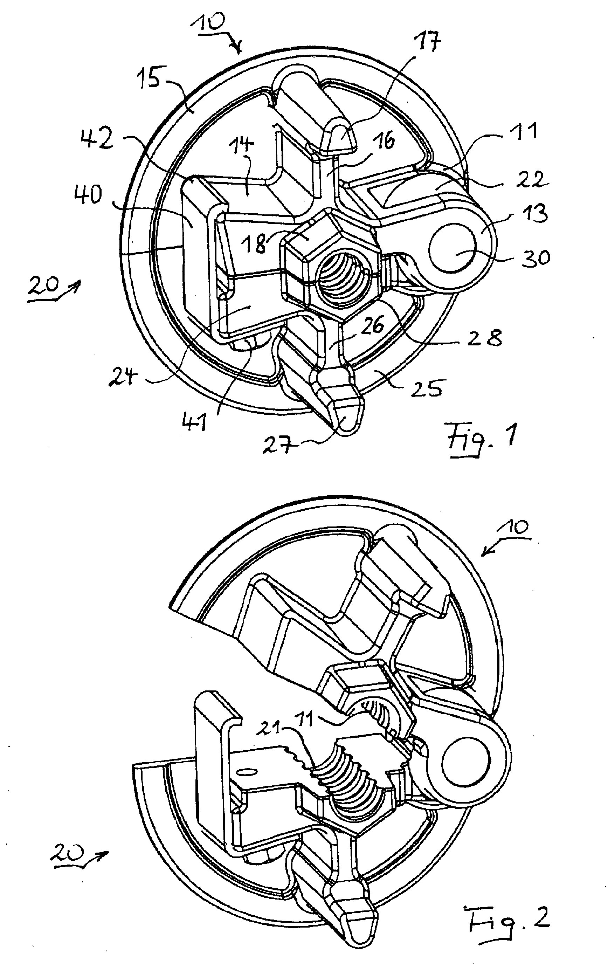

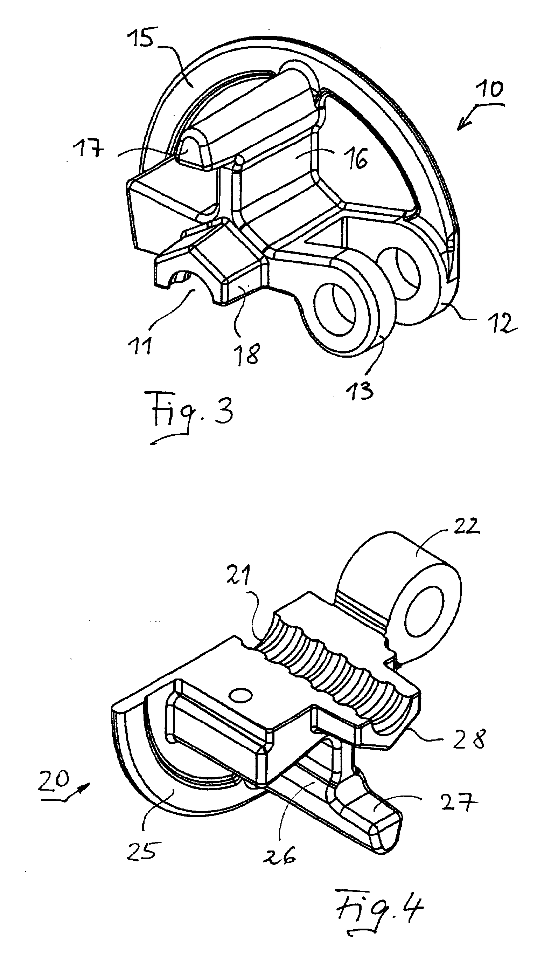

Die in den Figuren dargestellte Ankermutter ist längsgeteilt in zwei Teile 10 und 20, in welchen jeweils Halbschalen 11 und 21 ihres Innengewindes ausgebildet sind. Die beiden Teile 10 und 20 sind aneinander angelenkt, indem ein Lagerauge 22 am Teil 20 zwischen zwei Lageraugen 12 und 13 am Teil 10 eingreift und ein Lagerbolzen 30 diese Lageraugen durchgreift. Durch diese Gelenkverbindung können die beiden Teile 10, 20 zwischen den in Fig. 1 und Fig. 2 dargestellten Stellungen gegeneinander verschwenkt werden. Die Ankermutter kann hierdurch von der Seite her bzw. quer auf einen (nicht dargestellten) Ankerstab mit Aussengewinde aufgesetzt und über diesem zusammengeklappt werden, wobei ihr Innengewinde mit dem Aussengewinde des Ankerstabs in Eingriff kommt.

Auf der der Gelenkverbindung gegenüberliegenden Seite sind die beiden Teile 10, 20 mit nach aussen vorstehenden Spannbacken 14 und 24 versehen. Am Spannbacken 24 ist, ihn winklig umgreifend, eine z.B. aus einem elastischen Stahlblech gebogene Klammer 40 mittels einer Schraube 41 befestigt, welche mit ihrem hakenförmig abgebogenen freien Ende 42 in der Schliessstellung von Fig. 1 eine Kante des Spannbackens 14 umgreift und die Teile 10 und 20 dadurch in dieser Stellung zusammenhält. Der Spannbacken 14 ist so geformt und so mit einer abgeschrägten Aussenseite versehen, dass die Klammer 40 beim Zusammenklappen der Teile 10 und 20 nach aussen ausgelenkt wird und bei Erreichen der Schliessstellung selbsttätig hinter seiner Kante einrastet.

Die in den Figuren dargestellte Ankermutter ist weiter mit einer Druckplatte versehen, welche wie ihre Teile 10 und 20 in Teile 15 und 25 geteilt ist. Das Teil 15 der Druckplatte ist mit dem Teil 10 der Ankermutter und das Teil 25 der Druckplatte mit dem Teil 20 der Ankermutter einstückig ausgeführt. Die Unterteilung der Druckplatte ist so ausgeführt, dass sich im Teil 15 das Lagerauge 12 und im Teil 25 eine entsprechende halbrunde Ausnehmung ergibt. Das Innengewinde der Ankermutter ist, wie z.B. aus Fig. 2 ersichtlich, ganz durchgezogen und auch im Bereich der Druckplattenteile 15, 25 ausgebildet. Die Druckplattenteile 15 und 25 sind ausserdem mit einem umlaufenden, verstärkten Rand versehen.

Wie bei einer Flügelmutter sind an den Teilen 10 und 20 Flügel 16 bzw. 26 vorhanden welche an diesen sowie an den Druckplattenteilen 15 und 25 angeformt sind. Zusammen mit der Gelenkverbindung und den Spannbacken bilden die Flügel 16 und 26 eine kreuzförmige Struktur.

Im Bereich ihres in Anspannrichtung hinteren Endes bzw. Längsabschnitts ist die Ankermutter schliesslich auch noch als Sechskantmutter ausgebildet, um sie z.B. mit einem Schraubenschlüssel anziehen oder lösen zu können. Die Aussenkonturen 18 und 28 beider Teile 10 und 20 ergänzen sich hier zu einer solchen Sechskantform, welche zudem leicht konisch ausgebildet ist, damit unterschiedliche Schraubenschlüssel eingesetzt werden können.

Indem die freien Enden 17 und 27 der Flügel 16 und 26 in den Bereich der Sechskantmutter abgebogen sind und vorstehen, kann mit Vorteil zum Anspannen oder Lösen der Ankermutter zwischen der Sechskantmutter und den Flügelenden ein hebelartiges Werkzeug angesetzt werden. Als ein solches Werkzeug, mit dem auch die vorbeschriebene Klammer aus ihrer Rastposition gelöst werden könnte, kommt insbesondere ein klassischer Maurerhammer in Frage, wie ihn im Betonbau Beschäftigte standardmässig zur Hand haben.

Beim Anziehen der Ankermutter ergibt sich auf sie eine radial nach aussen wirkende Kraft, die unter anderem von der Gelenkverbindung sowie den übrigen Mitteln wie der Klammer, die sie zusammenhält, aufgenommen werden muss. Typische Gebrauchslasten für die die Ankermutter ausgelegt sein sollte sind ca. 95 kN bei einem Ankerstab von 15 mm Durchmesser und ca. 170 kN bei einem Ankerstab mit 20 mm Durchmesser. Damit die Ankermutter diese Belastung aushält, muss sie geeignet dimensioniert sein. Bei der in den Figuren dargestellten Ankermutter ist dies durch ihre den Figuren entnehmbaren Proportionen sichergestellt. Zum Beispiel beträgt der Durchmesser des Gelenkbolzens 30 etwa 100% des Durchmessers des Innengewindes. Der Aussendurchmesser der Gelenkaugen beträgt ca. 200% des Durchmessers des Innengewindes. Die äusseren Gelenkaugen 12 und 13 weisen in Längsrichtung eine Erstreckung von ca. 17% der Gewindelänge auf. Ihr gegenseitiger Abstand entspricht der Erstreckung des mittleren Gelenkauges 22 und beträgt ca. 37%. der Gewindelänge. Mit ihren Seitenflächen liegen die Gelenkaugen bündig aneinander an. Indem das Gelenkauge 12 in den Druckplattenteil 10 intergiert ist, ist es zusätzlich stabilisiert. Durch diese Ausbildung ist die Gelenkverbindung insgesamt sehr steif und kann auch einer in Längsrichtung sehr ungleichmässigen Belastung beim Anziehen der Ankermutter wiederstehen, so dass es auch nicht zu einem teilweisen Eingriffsverlust zwischen dem Innengewinde der Ankermutter und dem Aussengewinde des Ankerstabs kommt. Die Klammer 40 ist aus dem gleichen Grund flächig, d.h. mit einer Erstreckung in Längsrichtung ausgeführt, die im Beispiel ca. 50% der Gewindelänge beträgt. Schliesslich trägt die einstückige Ausbildung der Druckplattenteile 51 und 52 mit den Teilen 10 und 20 und den an diesen vorhandenen weiteren Anformungen zusätzlich zur Aussteifung der gesamten Konstruktion bei. Die Teile 10 und 20 können aus GGG-Gussmaterial gefertigt sein.

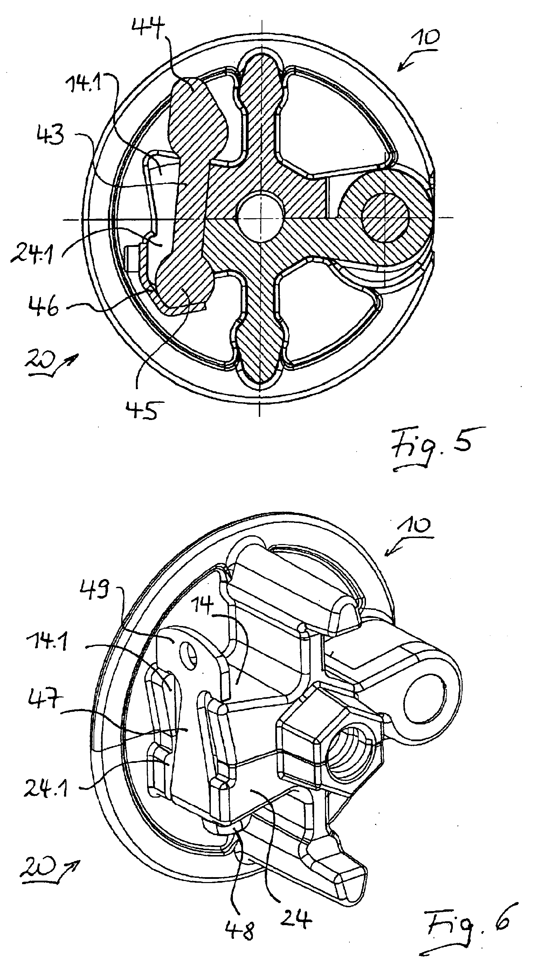

Fig. 5 zeigt in einem Querschnitt eine Ausführungsform mit alternativen Mitteln zum Zusammenhalten der Ankermutter, wobei ein Bolzen 43 in miteinander fluchtenden Nuten 14.1 und 24.1 in den Spannbacken 14 und 24 angeordnet ist und die Spannbacken mit einem zumindest in Längsrichtung der Ankermutter nach beiden Seiten hin verbreiterten Kopf- 44 und Fussteil 45 zusammenhält. Ansonsten entspricht die Ausführungsform von Fig. 5 derjenigen gemäss den vorbeschriebenen Figuren. Der Fussteil 45 wird zusätzlich gehalten durch eine am Spannbacken 24 angeschraubte elastische Klammer 46, wobei Fussteil 45 und Klammer 46 so geformt sind, dass der Bolzen 43 um den Fussteil 45 schwenkbar, in die dargestellte Stellung jedoch vorgespannt ist. Durch die Form des Spannbackens 14 und/oder die Form des Kopfteiles 44 ist wieder sichergestellt, dass der Bolzen 43 beim Zusammenklappen der Teile 10 und 20 nach aussen ausgelenkt wird und bei Erreichen der Schliessstellung selbsttätig in die Nuten 14.1 und 24.1 einrastet. Bei diesen alternativen Mitteln zum Zusammenhalten der Ankermutter ergeben sich unter Belastung keine Drehmomente, die zu einem ungewollten Öffnen der Verriegelung führen könnten. Der Bolzen 43 wird lediglich auf Zug belastet.

In einer modifizierten Ausführungsform könnte der Bolzen 43 auch ein Gewindebolzen und der Kopfteil 44 eine Schraubenmutter sein.

Fig. 6 zeigt eine Ausführungsform mit nochmals alternativen Mitteln zum Zusammenhalten der Ankermutter, wobei wieder eine Klammer 47 aus einem elastischen Stahlblech verwendet ist, die wie die Klammer 40 von Fig. 1 oder 2 am Spannbacken 24, ihn winklig umgreifend, mittels einer Schraube 48 befestigt ist. Die Klammer 47 greift jedoch, so wie der vorbeschriebene Bolzen 43, in Nuten 14.1 und 24.1 in den Spannbacken 14 und 24 ein und übergreift den Spannbacken 14 mit einem in Längsrichtung der Ankermutter nach beiden Seiten hin verbreiterten Kopfteil 49. Auch hierdurch werden Drehmomente vermieden, die zu einem ungewollten Öffnen der Verriegelung führen könnten. Die Breite der Nuten 14.1 und 24.1 beträgt vorzugsweise ca. 40% der Länge des Innengewindes. Im Übergangsbereich zum Kopfteil 49 sind an der Klammer 47 ausgeprägte Rundungen mit Hinterschneidungen vorgesehen, um in diesem Bereich Kerbspannungen zu vermeiden.

### BEZEICHNUNGSLISTE

- 10: Ankermutterteil
- 11: Halbschale des Innengewindes
- 12: Lagerauge
- 13: Lagerauge
- 14: Spannbacke
- 14.1: Nut im Spannbacken 14
- 15: Druckplattenteil
- 16: Flügel
- 17: Flügelende
- 18: Aussenkontur für Sechskantmutter
- 20: Ankermutterteil
- 21: Halbschale des Innengewindes
- 22: Lagerauge
- 24: Spannbacke
- 24.1: Nut im Spannbacken 24
- 25: Druckplattenteil
- 26: Flügel
- 27: Flügelende
- 28: Aussenkontur für Sechskantmutter
- 30: Lagerbolzen
- 40: Klammer
- 41: Schraube
- 42: freies Ende 42 der Klammer
- 43: Bolzen
- 44: Kopfteil des Bolzens 43
- 45: Fussteil des Bolzens 43
- 46: elastische Klammer
- 47: Klammer
- 48: Schraube
- 49: Kopfteil der Klammer 47

## Patentansprüche

1. Ankermutter für Ankerstäbe mit einer längsgeteilten Mutter, deren Teile aneinander angelenkt, quer auf die Ankerstäbe aufsetzbar und durch Zusammenklappen mit deren Gewinde in Eingriff bringbar sind und wobei Mittel zum Zusammenhalten der Mutter vorhanden sind, **dadurch gekennzeichnet, dass** die Mittel zum Zusammenhalten lediglich einen Teilumfang der Mutter umgreifen und mit ihr unverlierbar verbunden sind.

2. Ankermutter nach Anspruch 1, **dadurch gekennzeichnet, dass** die Mittel zum Zusammenhalten auch bei angezogener Mutter lösbar sind.

3. Ankermutter nach einem der Ansprüche 1 oder 2, **dadurch gekennzeichnet, dass** die Teile der Mutter auf ihrer der Anlenkung gegenüberliegenden Seite mit Spannbacken versehen sind und dass die Mittel zum Zusammenhalten an diesen Spannbacken angreifen.

4. Ankermutter nach einem der Ansprüche 1 - 3, **dadurch gekennzeichnet, dass** die Mittel zum Zusammenhalten eine elastische Klammer umfassen, die an einem der Teile der Mutter befestigt ist und an dem anderen Teil beim Zusammenklappen der Mutter selbsttätig einrastet und welche vorzugsweise mit einem zum Ansetzen eines Werkzeugs zum Lösen ihrer Verrastung geeigneten Abschnitt versehen ist.

5. Ankermutter nach einem der Ansprüche 1- 4, **dadurch gekennzeichnet, dass** die Mittel zum Zusammenhalten in Nuten in den Spannbacken eingreifen.

6. Ankermutter nach einem der Ansprüche 1 - 5, **dadurch gekennzeichnet, dass** einer der Teile der Mutter mit einem breiten Lagerauge zwischen ein Paar von Lageraugen des anderen Teils eingreift und dass ein Lagerbolzen die genannten Lageraugen durchgreift.

7. Ankermutter nach einem der Ansprüche 1 - 6, **dadurch gekennzeichnet, dass** sie eine geteilte Druckplatte aufweist und dass die Teile der Druckplatte mit den Teilen der Mutter einstückig ausgeführt sind.

8. Ankermutter nach den Ansprüchen 6 und 7, **dadurch gekennzeichnet, dass** die Druckplatte so geteilt ist, dass sich in ihrem einen Teil eines der Lageraugen des Paares von Lageraugen und in ihrem anderen Teil eine entsprechende Ausnehmung ergibt.

9. Ankermutter nach einem der Ansprüche 1 - 8, **dadurch gekennzeichnet, dass** die Teile der Mutter mit angeformten Flügeln versehen sind.

10. Ankermutter nach Anspruch 7 oder 8 und Anspruch 9, **dadurch gekennzeichnet, dass** die Flügel jeweils auch an die Druckplattenteile angeformt sind.

11. Ankermutter nach einem der Ansprüche 1-10, **dadurch gekennzeichnet, dass** sich die Aussenkonturen der Teile der Mutter entlang eines Längsabschnitts zu einer vorzugsweise konischen Sechskantmutter ergänzen.

12. Ankermutter nach den Ansprüchen 9 oder 10 und Anspruch 11, **dadurch gekennzeichnet, dass** die Flügel abgebogene Flügelenden aufweisen, die in den Längsabschnitt der Sechskantmutter vorstehen.
